# NEW EUROPEAN PATENT SPECIFICATION

(11) **EP 2 263 896 B2**
(45) Date of publication and mention of the opposition decision: **02.10.2019**
(45) Mention of the grant of the patent: 05.03.2014
(21) Application number: 09162860.2
(22) Date of filing: 16.06.2009
(51) Int. Cl.: B60J 7/02, B60J 7/043

(54) **Open roof construction for a vehicle**
Offene Dachkonstruktion für ein Fahrzeug
Construction décapotable pour véhicule

(43) Date of publication of application: 22.12.2010
(73) Proprietor: Inalfa Roof Systems Group B.V., 5804 AB Venray (NL)
(72) Inventor: Van Boxtel, Eduardus Christianus Henricus, 5411 BS, Zeeland (NL); Manders, Peter Christiaan Leonardus Johannes, 5961 GE, Horst (NL); Nellen, Marcel Johan Christiaan, 5803 HL, Venray (NL); De Bie, Sander, 6361 XG, Nuth (NL)
(74) Representative: De Vries & Metman

(56) References cited:
- EP-A1- 1 500 539
- EP-A2- 1 674 314
- EP-A2- 2 130 706
- DE-A1- 10 158 174

## Description

The invention relates to an open roof construction for a vehicle.

A known open roof construction of such a type is illustrated in DE 10333781 A1.

An increase of the inclination has two effects. Firstly it leads to an increase of the vertical movement of the leading end of the panel achievable with the curved track (or, in other words, the required constructional height for a specific vertical movement is reduced). Secondly it may compensate a movement of the leading edge of the panel when the rear end of the panel is moved upward, such that sealing problems may be avoided.

The curved track is part of a lever which with a first end is pivotably connected to the panel and with its opposite second end is slideable and rotatable in a second guide fixedly connected to the stationary roof part.

The change (increase) of inclination of the curved track is obtained automatically when the leading end of the panel is moved upward as result of the cooperation between the guide pin and curved track.

The open roof construction is provided with means for allowing a longitudinal sliding motion of the panel substantially in the longitudinal direction only when the leading end has moved upward.

As long as the leading end of the panel has not yet moved upward said means prevent a longitudinal sliding motion of the panel, and substantially only said increase in inclination of the curved track will occur. However, when the leading end of the panel has moved upward (sufficiently) such a sliding movement is possible.

It is an object of the present invention to provide an improved open roof construction of the type referred to above.

Thus, in accordance with the present invention an open roof construction for a vehicle is provided which is defined according to claim 1.

The inclined first portion of the third guide substantially prevents a longitudinal motion of the second slide shoe and thus of the panel. Such a motion, however, is possible when the second slide shoe has reached the second portion of the third guide.

Preferably the second end of the lever is provided with a first slide shoe cooperating with the second guide. Such a slide shoe not only enables the sliding motion but also allows a rotation of the curved track (that means change of inclination).

In one embodiment of the open roof construction according to the present invention the guide pin is carried by a slide which in a driven manner can move in said first guide. For example said slide may be driven by a drive cable.

When at least two of the first, second and third guides, when provided, are combined into a single guide, the number of parts and thus the complexity of the construction may be minimised. Thus it even may be possible that the first, second and third guides all are combined into a single guide.

Finally, when the curved track has an end remote from the panel extending substantially vertically, the pin, once entered in said end, may apply a drive force on said curved track and thus on the panel for moving it longitudinally.

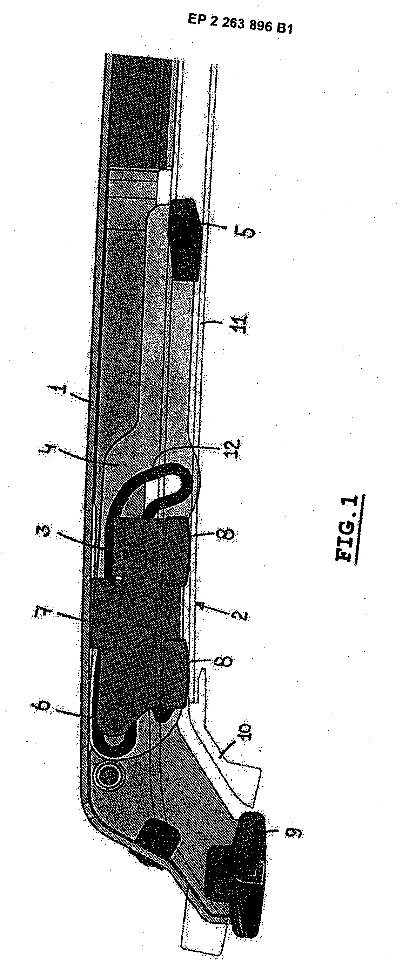

Hereinafter the invention will be elucidated while referring to the drawing, in which figures 1-3 schematically show successive stages during opening an open roof construction in accordance with the present invention.

The figures show the leading (forward) part of an open roof construction for a vehicle, comprising a movable panel 1 for opening and closing a roof opening (not illustrated) in a stationary roof part (represented here by a guide 2) of the vehicle. A rear end of the panel, as viewed in the longitudinal direction of the car (which would be situated at the right from the part of the construction shown in the figures and which thus has not been illustrated), can be moved upward and downward by a first moving mechanism (for example for moving the panel to a tilt position in which the roof opening is (partly) open at its rear end). The details of such first moving mechanism are not important for the present invention and will not be discussed here.

The leading end of the panel 1 as represented in the figures can be moved upward and downward by a second moving mechanism. This moving mechanism comprises a curved track 3 which is part of a lever 4 which with a first end is pivotably connected to the panel 1 and which at its opposite second end is provided with a first slide shoe 5 cooperating in a sliding manner with guide 2. The slide shoe 5 is shaped in such a manner that it also can rotate in a limited way within the guide 2.

A guide pin 6 is carried by a slide 7 which by means of slide shoes 8 can move in said guide 2. In a manner known per se the slide 7 is driven, for example by a drive cable (not illustrated in detail). The guide pin 6 engages said curved track 3 of the lever 4.

At its leading end the panel 1 is provided with a slide shoe 9 which also cooperates with guide 2.

It is noted that the slide shoes 5, 8 and 9 do not necessarily have to cooperate with the same guide 2. It is conceivable that some of these guide shoes cooperate with different guides.

The guide has a first portion 10 inclined with respect to the longitudinal direction followed by a second portion 11 substantially in parallel to said longitudinal direction (longitudinal direction substantially means the direction in which the vehicle moves or in which the main sliding movement of the panel 1 occurs). In the inclined portion 10 the slide shoe 9 cannot move in the longitudinal direction without simultaneously moving upward because the inclined portion extends substantially vertically and the slide shoe 9 cannot move in the longitudinal direction at all, whereas a longitudinal movement without a vertical displacement is possible when the slide shoe 9 is positioned in the second portion 11 of the guide 2.

As illustrated best in figure 1 the curved track 3 has an end 12 remote from the panel 1 extending substantially vertically.

The operation of the open roof construction is as follows. In the closed position of the panel 1. (figure 1) the lever 4 lies close to the panel 2 in its uppermost position. The slide 7 is in a leftmost position with respect to the guide 2. Its guide pin 6 is located near to a left end of the curved track 3. The slide shoe 9 of the leading end of the panel 1 is located in the inclined portion 10 of the guide 2.

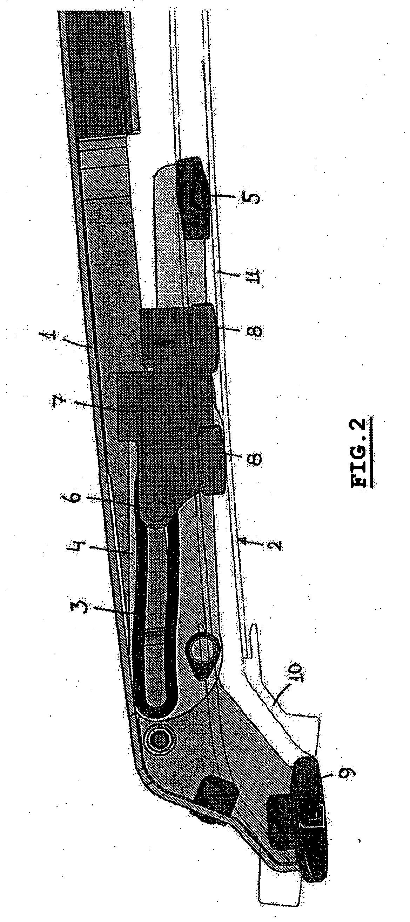

It is important to note that in this situation which shows the uppermost position of the lever 4, the curved track 3 converges slightly to the guide 2 from left to right. Thus, when moving the slide 7 with guide pin 6 to the right, the leading end of the panel 1 is slightly lifted as a result of the (pivot) connection between the lever 4 and panel 1. This results in a situation as illustrated in figure 2 in which the inclination of the lever 4 has increased (lever 4 has pivoted with respect to the panel 1 and with respect to the guide 2).

During this first phase of lifting the leading end of the panel 1 the slide shoe 9 cooperates with the inclined portion 10 of the guide 2, such that notwithstanding the movement of the slide 7 to the right the panel 1 will not follow such movement to the right.

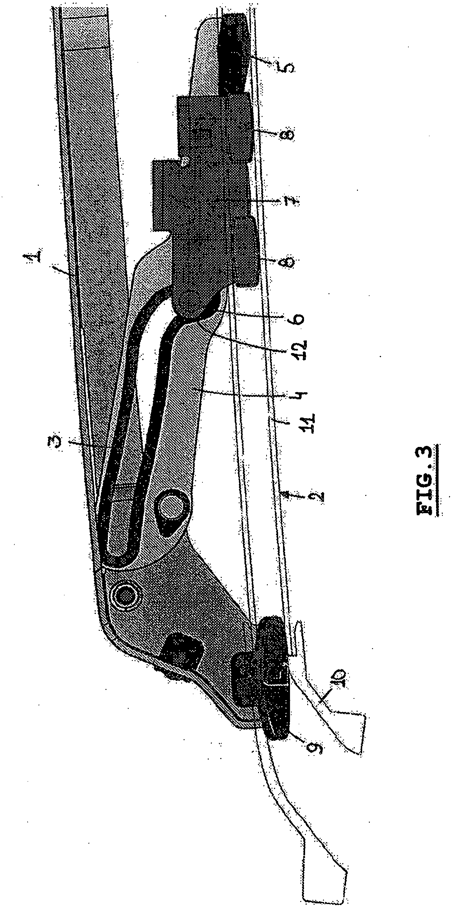

A continued movement of the slide 7 will result in the situation illustrated in figure 3 in which the inclination of the lever 4 has increased still further, the slide shoe 9 has entered the substantially horizontally extending portion 11 of the guide 2 and the guide pin 6 has reached the substantially vertically extending end 12 of the curved track 3. A movement of the slide 7 to the right now will result in a corresponding movement of the panel 1.

The invention is not limited to the embodiment described before which may be varied widely within the scope of the invention as defined by the appending claims. A slide shoe and guide pin define elements with an equivalent function which may be devised in many ways (engaging a corresponding guiding element internally or externally).

## Claims

1. Open roof construction for a vehicle, comprising a roof opening defined in a stationary roof part of the vehicle and a movable panel (1) for opening and closing said roof opening, of which panel the rear end, as viewed in the longitudinal direction of the vehicle, can be moved upward and downward by a first moving mechanism and of which panel (1) the leading end can be moved upward and downward by a second moving mechanism comprising at least a curved track (3) attached to the panel and a guide pin (6) engaging said curved track and movable along a first guide (2) fixedly connected to the stationary roof part, wherein said curved track (3) is attached to the panel (1) in a pivotable manner, such that the inclination of the curved track with respect to the panel increases when the leading end of the panel moves upward, and wherein the curved track (3) is part of a lever (4) which with a first end is pivotably connected to the panel (1) and with its opposite second end is slidable and rotatable in a second guide (2) fixedly connected to the stationary roof part and extending substantially in the direction in which the main sliding movement of the panel (1) occurs, wherein means are provided for allowing a longitudinal sliding motion of the panel substantially in the longitudinal direction only when the leading end has moved upward, and wherein the panel (1) at its leading end is provided with a second slide shoe (9) cooperating with a third guide (2) fixedly connected to the stationary roof part, which third guide has a first portion (10) inclined substantially vertically with respect to said longitudinal direction such that the slide shoe (9) cannot move in the longitudinal direction and thus the panel cannot move in the longitudinal direction, followed by a second portion (11) substantially in parallel to said longitudinal direction, wherein said second slide shoe (9) is positioned in said inclined portion (10) when the leading end of the panel (1) is in a lower position and moves towards the second portion (11) when the leading end of the panel moves upward.

2. Open roof construction according to claim 1, wherein the second end of the lever (4) is provided with a first slide shoe (5) cooperating with the second guide (2).

3. Open roof construction according to any of the previous claims, wherein the guide pin (6) is carried by a slide (7) which in a driven manner can move in said first guide.

4. Open roof construction according to claim 3, wherein the slide (7) is driven by a drive cable.

5. Open roof construction according any of the previous claims, wherein at least two of the first, second and third guides, when provided, are combined into a single guide (2).

6. Open roof construction according to claim 5, wherein the first, second and third guides all are combined into a single guide (2).

7. Open roof construction according any of the previous claims, wherein the curved track (3) has an end (12) remote from the panel (1) extending substantially vertically.

## Patentansprüche

1. Offendachkonstruktion für ein Fahrzeug, aufweisend eine Dachöffnung, die in einem stationären Dachteil des Fahrzeugs definiert ist, und ein bewegbares Paneel (1) zum Öffnen und Schließen der Dachöffnung, von welchem Paneel das hintere Ende, gesehen in der Längsrichtung des Fahrzeugs, nach oben und nach unten bewegt werden kann durch einen ersten Bewegungsmechanismus und von welchem Paneel (1) das vordere Ende nach oben und nach unten bewegt werden kann durch einen zweiten Bewegungsmechanismus, der aufweist wenigstens eine gekrümmte Bahn (3), die an dem Paneel angebracht ist, und einen Führungszapfen (6), der mit der gekrümmten Bahn im Eingriff ist und entlang einer ersten Führung (2) bewegbar ist, die mit dem stationären Dachteil fest verbunden ist, wobei die gekrümmte Bahn (3) an dem Paneel (1) in schwenkbarer Weise angebracht ist, so dass die Neigung der gekrümmten Bahn bezüglich des Paneels ansteigt, wenn das vordere Ende des Paneels sich nach oben bewegt, und wobei die gekrümmte Bahn (3) Teil eines Hebels (4) ist, der mit einem ersten Ende schwenkbar mit dem Paneel (1) verbunden ist und der mit seinem entgegengesetzten zweiten Ende in einer zweiten Führung (2) verschiebbar und drehbar ist, die mit dem stationären Dachteil fest verbunden ist und sich im Wesentlichen in der Richtung erstreckt, in welcher die Hauptverschiebebewegung des Paneels (1) auftritt, wobei Mittel bereitgestellt sind zum Erlauben einer Längsverschiebebewegung des Paneels im Wesentlichen nur in der Längsrichtung, wenn das vordere Ende sich nach oben bewegt hat, und wobei das Paneel (1) an seinem vorderen Ende mit einem zweiten Gleitschuh (9) versehen ist, der mit einer dritten Führung (2) kooperiert, die fest mit dem stationären Dachteil verbunden ist, welche dritte Führung einen ersten Abschnitt (10) hat, der im Wesentlichen vertikal geneigt ist bezüglich der Längsrichtung, sodass der Gleitschuh (9) sich nicht in der Längsrichtung bewegen kann und daher das Paneel sich nicht in der Längsrichtung bewegen kann, gefolgt von einem zweiten Abschnitt (11), der im Wesentlichen parallel ist zu der Längsrichtung, wobei der zweite Gleitschuh (9) in dem geneigten Abschnitt (10) positioniert ist, wenn das vordere Ende des Paneels (1) in einer unteren Position ist und sich zu dem zweiten Abschnitt (11) hin bewegt, wenn das vorderen Ende des Paneels sich nach oben bewegt.

2. Offendachkonstruktion gemäß Anspruch 1, wobei das zweite Ende des Hebels (4) mit einem ersten Gleitschuh (5) versehen ist, der mit der zweiten Führung (2) kooperiert.

3. Offendachkonstruktion gemäß irgendeinem der vorhergehenden Ansprüche, wobei der Führungszapfen (6) von einem Gleitstück (7) getragen wird, das sich in einer angetriebenen Weise in der ersten Führung bewegen kann.

4. Offendachkonstruktion gemäß Anspruch 3, wobei das Gleitstück (7) von einem Antriebsseil angetrieben ist.

5. Offendachkonstruktion gemäß irgendeinem der vorhergehenden Ansprüche, wobei wenigstens zwei von der ersten, der zweiten und der dritten Führung, wenn bereitgestellt, zu einer einzigen Führung (2) kombiniert sind.

6. Offendachkonstruktion gemäß Anspruch 5, wobei die erste, die zweite und die dritte Führung alle zu einer einzigen Führung (2) kombiniert sind.

7. Offendachkonstruktion gemäß irgendeinem der vorhergehenden Ansprüche, wobei die gekrümmte Bahn (3) ein Ende (12) hat, das von dem Paneel (1) entfernt ist, das sich im Wesentlichen vertikal erstreckt.

## Revendications

1. Construction décapotable pour un véhicule, comprenant une ouverture de toit définie dans une partie de toit fixe du véhicule et un panneau mobile (1) pour ouvrir et fermer ladite ouverture de toit, dont l'extrémité arrière du panneau, comme observé dans la direction longitudinale du véhicule, peut être déplacée vers le haut et vers le bas par un premier mécanisme mobile et dont l'extrémité d'attaque du panneau (1) peut être déplacée vers le haut et vers le bas par un second mécanisme de déplacement comprenant au moins un rail incurvé (3) fixé au panneau et une broche de guidage (6) mettant en prise ledit rail incurvé et mobile le long d'un premier guide (2) raccordé de manière fixe à la partie de toit fixe, dans laquelle ledit rail incurvé (3) est fixé au panneau (1) d'une manière pivotante, de sorte que l'inclinaison du rail incurvé par rapport au panneau augmente lorsque l'extrémité d'attaque du panneau se déplace vers le haut, dans laquelle le rail incurvé (3) fait partie d'un levier (4) qui, avec une première extrémité, est raccordé de manière pivotante au panneau (1) et avec sa seconde extrémité opposée, peut coulisser et tourner dans un deuxième guide (2) raccordé de manière fixe à la partie de toit fixe et s'étendant sensiblement dans la direction dans laquelle le mouvement de coulissement principal du panneau (1) a lieu, dans laquelle on prévoit des moyens pour permettre un mouvement de coulissement longitudinal du panneau sensiblement dans la direction longitudinale uniquement lorsque l'extrémité d'attaque s'est déplacée vers le haut, et dans laquelle le panneau (1), au niveau de son extrémité d'attaque, est prévu avec un second patin de coulissement (9) coopérant avec un troisième guide (2) raccordé, de manière fixe à la partie de panneau fixe, lequel le troisième guide a une première partie (10) inclinée sensiblement verticalement par rapport à ladite direction longitudinale de sorte que le patin de coulissement (9) ne peut pas se déplacer dans la direction longitudinale et ainsi le panneau ne peut pas se déplacer dans la direction longitudinale, suivi par une seconde partie (11) sensiblement parallèle à ladite direction longitudinale, dans laquelle ledit second patin de coulissement (9) est positionné dans ladite partie inclinée (10) lorsque l'extrémité d'attaque du panneau (1) est dans une position inférieure et se déplace vers la seconde partie (11) lorsque l'extrémité d'attaque du panneau se déplace vers le haut.

2. Construction décapotable selon la revendication 1, dans laquelle la seconde extrémité du levier (4) est prévue avec un premier patin de coulissement (5) coopérant avec le deuxième guide (2).

3. Construction décapotable selon l'une quelconque des revendications précédentes, dans laquelle la broche de guidage (6) est portée par une glissière (7) qui, d'une manière entraînée, peut se déplacer dans ledit premier guide.

4. Construction décapotable selon la revendication 3, dans laquelle la glissière (7) est entraînée par un câble d'entraînement.

5. Construction décapotable selon l'une quelconque des revendications précédentes, dans laquelle au moins deux parmi les premier, deuxième et troisième guides, lorsqu'ils sont prévus, sont combinés en un guide unique (2).

6. Construction décapotable selon la revendication 5, dans laquelle les premier, deuxième et troisième guides sont tous combinés en un seul guide (2).

7. Construction décapotable selon l'une quelconque des revendications précédentes, dans laquelle le rail incurvé (3) a une extrémité (12) à distance du panneau (1) s'étendant de manière sensiblement verticale.
